# EUROPEAN PATENT APPLICATION

(11) **EP 4 723 302 A1**
(43) Date of publication of application: **08.04.2026**
(21) Application number: 25194807.1
(22) Date of filing: 08.08.2025
(51) Int. Cl.: H01M 10/625, H01M 10/647, H01M 50/209, H01M 50/242, H01M 50/249, H01M 50/291, H01M 50/296, H01M 50/264, H01M 10/655

(54) **POWER STORAGE DEVICE**

(30) Priority: 01.10.2024 JP 2024172446
(71) Applicant: TOYOTA JIDOSHA KABUSHIKI KAISHA, Toyota-shi, Aichi-ken 471-8571 (JP)
(72) Inventor: INOUE, Shigeyuki, Toyota-shi, 471-8571 (JP)
(74) Representative: TBK

(57) **Abstract**

The power storage device (10) includes a power storage stack (11, 12) which includes a plurality of power storage cells (100) arranged side by side in a first direction, and a side wall (212) disposed on a lateral side of the plurality of power storage cells in a second direction. Each power storage cell includes a cell case (114) and an external terminal (120). The side wall (212) includes an opposite portion (213) facing the side surface (114b) of the cell case in the second direction, and a recess (214) formed at a position facing the external terminal in the second direction and recessed from the opposite portion in a direction away from the external terminal. The length of the recess (214) in the vertical direction is greater than the length of the external terminal (120) in the vertical direction.

## Description

### CROSS REFERENCE TO RELATED APPLICATIONS

This non-provisional application is based on Japanese Patent Application No. 2024-172446 filed on October 1, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2022-525014 discloses a power battery pack that includes a plurality of unit cells and a housing device. An external terminal and an explosion-proof valve are provided on a side surface of a case of each unit cell.

### SUMMARY

In the power battery pack described in Japanese National Patent Publication No. 2022-525014, there is a concern that when an external force is applied to the power battery pack from a lateral direction, the external terminal of each unit cell may be damaged.

An object of the present disclosure is to provide a power storage device capable of preventing an external terminal from being damaged.

A power storage device according to one aspect of the present disclosure includes a power storage stack which includes a plurality of power storage cells arranged side by side in a first direction, and a side wall disposed on a lateral side of the plurality of power storage cells in a second direction orthogonal to both the first direction and a vertical direction. Each of the plurality of power storage cells includes: a cell case, and an external terminal protruding in the second direction from a side surface of the cell case in the second direction. The side wall includes an opposite portion facing the side surface of the cell case in the second direction, and a recess formed at a position facing the external terminal in the second direction and recessed from the opposite portion in a direction away from the external terminal.

The length of the recess in the vertical direction is greater than the length of the external terminal in the vertical direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically illustrating a vehicle equipped with a power storage device according to an embodiment of the present disclosure.
Fig. 2 is a perspective view schematically illustrating a power storage device and a frame member.
Fig. 3 is a cross-sectional view taken along line III-III in Fig. 2.
Fig. 4 is a cross-sectional view taken along line IV-IV in Fig. 3.
Fig. 5 is a cross-sectional view illustrating an external terminal.
Fig. 6 is a cross-sectional view schematically illustrating a modification of a side wall.
Fig. 7 is a cross-sectional view schematically illustrating a modification of the power storage device.

### DESCRIPTION OF THE PREFERRED EMBODIMENTS

An embodiment of the present disclosure will be described with reference to the drawings. In the drawings, the same or corresponding members will be denoted by the same reference numerals.

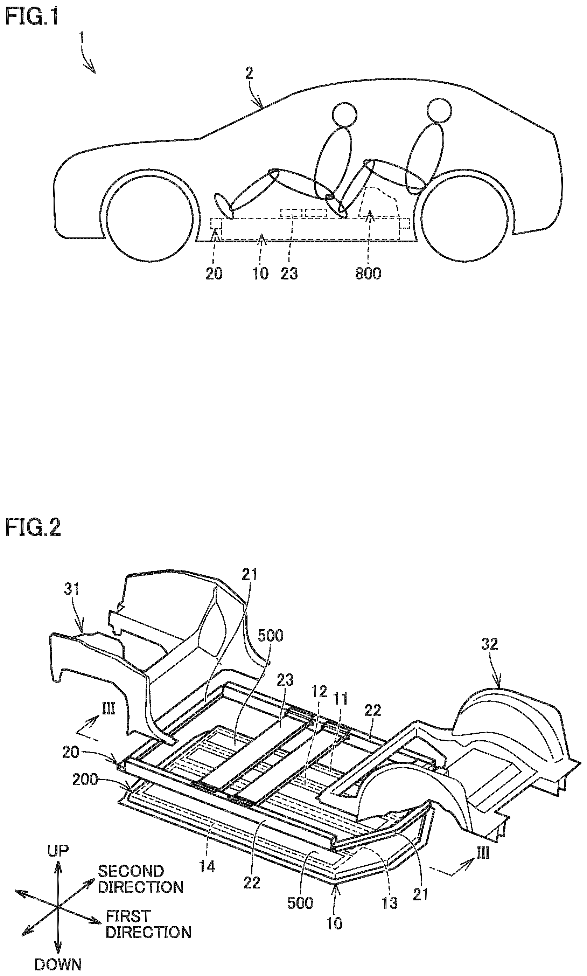

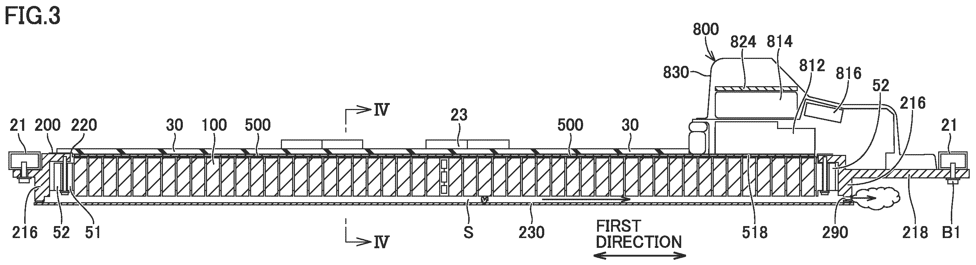

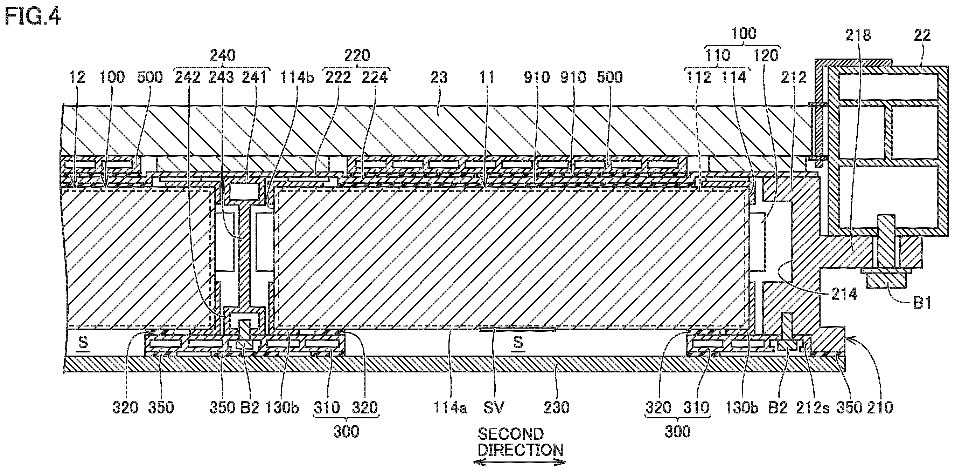

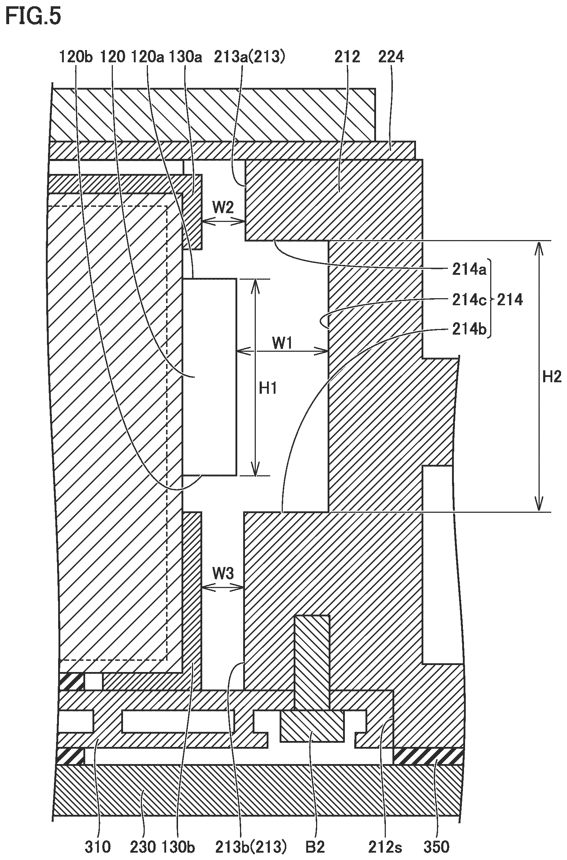

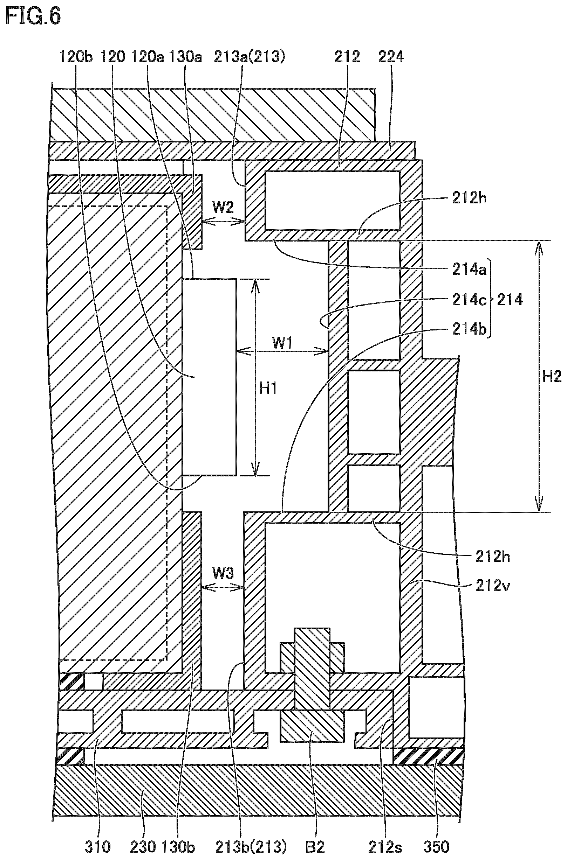

Fig. 1 is a diagram schematically illustrating a vehicle equipped with a power storage device according to an embodiment of the present disclosure. Fig. 2 is a perspective view schematically illustrating a power storage device and a frame member. Fig. 3 is a cross-sectional view taken along line III-III in Fig. 2. Fig. 4 is a cross-sectional view taken along line IV-IV in Fig. 3. Fig. 5 is an exploded cross-sectional view of the power storage device. Fig. 6 is an enlarged cross-sectional view of the power storage device.

As illustrated in Fig. 1, a vehicle 1 includes a vehicle main body 2 and a power storage device 10. Examples of vehicle 1 include a hybrid electric vehicle (HEV), a plug-in hybrid vehicle (PHEV), and a battery electric vehicle (BEV).

As illustrated in Figs. 1 and 2, vehicle main body 2 includes a frame member 20, a front structural member 31, and a rear structural member 32. Frame member 20 is disposed under vehicle main body 2. Frame member 20 includes a pair of first frames 21, a pair of second frames 22, and a cross frame 23.

The pair of first frames 21 faces each other in a first direction. The first direction is parallel to the front-rear direction of vehicle 1. In the example illustrated in Fig. 2, first frame 21 disposed at a front position extends in a second direction orthogonal to both the first direction and the vertical direction. First frame 21 disposed at a rear position extends in the second direction and bulges rearward. The second direction is parallel to the left-right direction (width direction) of vehicle 1.

The pair of second frames 22 faces each other in the second direction. Each second frame 22 extends in the first direction. An end of each second frame 22 in the first direction is connected to first frame 21. The pair of second frames 22 and the pair of first frames 21 form a substantially quadrangular cylinder to surround power storage device 10.

Cross frame 23 is disposed between the pair of first frames 21 and connects the pair of second frames 22 to each other. Cross frame 23 forms, for example, a seat cross.

Front structural member 31 is connected to a front portion of frame member 20. Rear structural member 32 is connected to a rear portion of frame member 20. Each of the structural members 31 and 32 may be formed by die-casting aluminum.

Power storage device 10 is attached to frame member 20. As illustrated in Figs. 2 to 5, power storage device 10 is disposed at a position below cross frame 23. As illustrated in Figs. 1 to 5, power storage device 10 includes four power storage stacks 11, 12, 13, 14, a housing 200 (see Figs. 2 and 3), a support member 300, a cooler 500, and an instrument unit 800. The number of the power storage stacks is not limited to four. Instrument unit 800 is not illustrated in Fig. 2.

Each power storage stack 11, 12, 13, 14 includes at least one power storage cell 100. In the present embodiment, each power storage stack 11, 12, 13, 14 includes a power storage cell group consisting of a plurality of (for example, 50) power storage cells 100 arranged side by side in the first direction. Each power storage stack 11, 12, 13, 14 may further include a plurality of spacers. Each spacer is disposed between a pair of power storage cells 100 adjacent to each other in the power storage cell group. Each power storage stack 11, 12, 13, 14 is formed into a rectangular parallelepiped shape longer in the first direction. As illustrated in Fig. 2, the four power storage stacks 11, 12, 13 and 14 are arranged side by side in the second direction.

As illustrated in Fig. 3, a pair of end plates 51 are provided on both sides of the plurality of power storage cells 100 in the first direction to sandwich the plurality of power storage cells 100 from both sides in the first direction. A monitoring unit (such as a smart battery management system) 52 is disposed outside each end plate 51 in the first direction.

As illustrated in Figs. 4 and 5, each power storage cell 100 includes a cell body 110 and a pair of external terminals 120.

Cell body 110 includes an electrode body 112 and a cell case 114. The thickness direction of cell body 110 is identical to the first direction. The width direction (which is perpendicular to both the thickness direction and the vertical direction) of cell body 110 is identical to the second direction.

Electrode body 112 may be formed as a wound body in which a positive electrode sheet and a negative electrode sheet are wound with a separator interposed therebetween, or may be formed as a stack body in which a positive electrode sheet and a negative electrode sheet are stacked with a separator interposed therebetween. Electrode body 112 is formed to have a shape longer in the second direction.

Cell case 114 accommodates electrode body 112. Cell case 114 is formed into a rectangular parallelepiped shape. The length of cell case 114 in the width direction is greater than the length of cell case 114 in the vertical direction, and is greater than the length of cell case 114 in the thickness direction. Cell case 114 is made of a metal such as aluminum. As illustrated in Figs. 4 and 5, a safety valve SV is provided on a lower surface 114a of cell case 114.

Each external terminal 120 protrudes from a side surface 114b of cell case 114 in the second direction. One of the pair of external terminals 120 protrudes from side surface 114b of cell case 114 to one side in the second direction. The other one of the pair of external terminals 120 protrudes from side surface 114b of cell case 114 to the other side in the second direction.

Each power storage stack 11, 12, 13, 14 further includes an upper restraint band 130a and a lower restraint band 130b.

Upper restraint band 130a restrains the plurality of power storage cells 100 from both sides in the first direction. Upper restraint band 130a is disposed at a position above external terminal 120. Upper restraint band 130a is in contact with side surface 114b of each power storage cell 100.

Lower restraint band 130b restrains the plurality of power storage cells 100 from both sides in the first direction. Lower restraint band 130b is disposed at a position below external terminal 120. Lower restraint band 130b is in contact with side surface 114b of each power storage cell 100.

Housing 200 houses the four power storage stacks 11, 12, 13 and 14. As illustrated in Figs. 4 and 5, housing 200 includes a frame body 210 (see Fig. 4), a top wall 220, a bottom wall 230, and a plurality of partition walls 240 (three in the present embodiment).

Frame body 210 encloses the four power storage stacks 11, 12, 13 and 14 as a group. Frame body 210 may be formed into a quadrangular cylindrical shape. Frame body 210 is formed by die-casting aluminum, for example. As illustrated in Figs. 3 and 4, frame body 210 includes a pair of side walls 212, a pair of connection walls 216 (see Fig. 3), and a stationary member 218.

As illustrated in Fig. 4, each side wall 212 is disposed outside the plurality of power storage stacks 11, 12, 13 and 14 in the second direction. In other words, the pair of side walls 212 are disposed to sandwich the four power storage stacks 11, 12, 13 and 14 in the second direction. Each side wall 212 extends in the first direction. The length of each side wall 212 in the first direction is longer than the length of each power storage stack 11, 12, 13, 14 in the first direction.

As illustrated in Figs. 4 and 5, each side wall 212 includes an opposite portion 213 and a recess 214.

Opposite portion 213 faces side surface 114b of cell case 114 in the second direction. As illustrated in Fig. 5, opposite portion 213 includes an upper opposite portion 213a and a lower opposite portion 213b.

Upper opposite portion 213a faces an upper portion of power storage stack 11, 14 disposed on the outer side in the second direction, the upper portion being located above external terminal 120. In the present embodiment, upper opposite portion 213a faces upper restraint band 130a. Another member may be interposed between upper opposite portion 213a and side surface 114b of cell case 114. Upper opposite portion 213a may be formed flat.

Lower opposite portion 213b faces a lower portion of power storage stack 11, 14, the lower portion being located below external terminal 120. In the present embodiment, lower opposite portion 213b faces lower restraint band 130b. Another member may be interposed between lower opposite portion 213b and side surface 114b of cell case 114. Lower opposite portion 213b may be formed flat.

Recess 214 is formed at a position facing external terminal 120 in the second direction. Recess 214 is recessed from opposite portion 213 in a direction away from external terminal 120. As illustrated in Fig. 5, recess 214 includes an upper surface 214a, a lower surface 214b, and a recessed area 214c.

Upper surface 214a of recess 214 is located at a position higher than an upper surface 120a of external terminal 120. Lower surface 214b of recess 214 is located at a position lower than a lower surface 120b of external terminal 120. In other words, as illustrated in Fig. 5, a length H2 of recess 214 in the vertical direction is larger than a length H1 of external terminal 120 in the vertical direction.

Recessed area 214c faces external terminal 120 in the second direction. Recessed area 214c may be formed flat. A dimension W1 between external terminal 120 and recessed area 214c in the second direction is larger than a dimension W2 between power storage stack 11, 14 and upper opposite portion 213a in the second direction, and is larger than a dimension W3 between power storage stack 11, 14 and lower opposite portion 213b in the second direction. In the present embodiment, the dimension W2 represents the length between upper restraint band 130a and upper opposite portion 213a in the second direction, and the dimension W3 represents the length between lower restraint band 130b and lower opposite portion 213b in the second direction. The dimension W2 and the dimension W3 may be set to have the same length.

The pair of connection walls 216 are provided on both sides of each power storage stack 11, 12, 13, 14 in the first direction (thickness direction). Each connection wall 216 connects the pair of side walls 212. In the present embodiment, connection wall 216 disposed on one side in the first direction (front side in the front-rear direction of the vehicle) connects one ends (front ends) of the pair of side walls 212 in the first direction. Connection wall 216 disposed on the other side in the first direction (rear side in the front-rear direction of the vehicle) connects the other ends (rear ends) of the pair of side walls 212 in the first direction.

Stationary member 218 is fixed to frame member 20. Stationary member 218 protrudes outward from an outer surface of side wall 212 and from an outer surface of connection wall 216. The stationary member 218 is fastened to a lower surface of first frame 21 and to a lower surface of second frame 22 by a bolt B1.

Top wall 220 is provided above at least one power storage cell 100. In the present embodiment, top wall 220 is provided above the four power storage stacks 11, 12, 13 and 14. Top wall 220 covers the four power storage stacks 11, 12, 13 and 14. Top wall 220 is connected to an upper end of frame body 210. Specifically, top wall 220 is connected to the upper end of each side wall 212 and the upper end of each connection wall 216 by welding or the like. As illustrated in Fig. 4, top wall 220 has a top portion 222 and four recesses 224.

Top portion 222 is formed flat. Top portion 222 overlaps in the vertical direction with an end portion of each power storage stack in the second direction.

Each recess 224 is recessed downward from top portion 222. Each recess 224 is formed flat. Each recess 224 is formed above a central portion of each power storage stack 11, 12, 13, 14 in the second direction. As illustrated in Fig. 4, the length of each recess 224 in the second direction is shorter than the length of power storage cell 100 in the second direction. Each recess 224 is in contact with the upper surface of cell case 114 via a thermally conductive adhesive material 910.

Bottom wall 230 is disposed at a position below the four power storage stacks 11, 12, 13 and 14. Bottom wall 230 is connected to a lower portion of frame body 210. More specifically, bottom wall 230 is connected to a lower end of each side wall 212 and a lower end of each connection wall 216 by an adhesive member 350 (see Figs. 4 and 5). In addition, bottom wall 230 may be fastened to a lower portion of frame body 210 by a bolt. Bottom wall 230 is preferably formed flat.

Each partition wall 240 partitions a pair of power storage stacks facing each other in the second direction. Each partition wall 240 is disposed between a pair of external terminals 120 facing each other in the second direction. Each partition wall 240 extends downward from top wall 220. An upper end of the partition wall 240 is connected to a lower surface of top portion 222 of top wall 220 by welding, bonding, fastening, or the like. Each partition wall 240 extends in the first direction. An end of each partition wall 240 in the first direction may be connected to connection wall 216 of frame body 210 or may be separated from connection wall 216. Each partition wall 240 is connected to cross frame 23 via top wall 220. Each partition wall 240 may be formed by extrusion molding a metal such as aluminum.

As illustrated in Fig. 4, each partition wall 240 includes an upper partition portion 241, a lower partition portion 242, and a middle partition portion 243.

Upper partition portion 241 is provided at a position higher than external terminal 120. Upper partition portion 241 is connected to top wall 220. Specifically, an upper surface of upper partition portion 241 is connected to the lower surface of top portion 222 of top wall 220 by welding, bonding, fastening, or the like. Upper partition portion 241 may be formed into a hollow shape. In the present embodiment, upper partition portion 241 is formed into a quadrangular cylindrical shape extending in the first direction. Upper partition portion 241 is disposed between a pair of restraining bands 53 adjacent to each other in the second direction.

Lower partition portion 242 is provided at a position lower than external terminal 120. Lower partition portion 242 may be formed into a hollow shape. In the present embodiment, lower partition portion 242 is formed into a quadrangular cylindrical shape extending in the first direction. Lower partition portion 242 is disposed between a pair of restraining bands 53 adjacent to each other in the second direction.

Middle partition portion 243 connects upper partition portion 241 and lower partition portion 242. Middle partition portion 243 is provided between a pair of external terminals 120 adjacent to each other in the second direction. Middle partition portion 243 is formed into a flat plate shape. The width of middle partition portion 243 in the second direction is smaller than the width of upper partition portion 241 in the second direction and the width of lower partition portion 242 in the second direction.

Support member 300 supports the four power storage stacks 11, 12, 13 and 14. Support member 300 is fixed on bottom wall 230. Power storage device 10 according to the present embodiment includes five support members 300 that are spaced apart from each other in the second direction. Each support member 300 includes a main body 310 and an adhesive member 320.

Main body 310 is disposed at a position overlapping in the vertical direction with an end portion of each of the pair of power storage cells 100 facing each other in the second direction. Main body 310 is disposed in such a manner that a portion (which includes safety valve SV) of lower surface 114a of cell case 114 other than the portion overlapping with main body 310 in the vertical direction is exposed downward. In other words, a portion of lower surface 114a of cell case 114 that does not overlap with main body 310 in the vertical direction is exposed downward. Main body 310 extends in the first direction. Main body 310 may be formed by extrusion molding a metal such as aluminum.

Each of the three main bodies 310 disposed in the central area in the second direction is fastened to a lower end of partition wall 240 by a bolt B2. Each of the pair of main bodies 310 disposed on both outer sides in the second direction is fastened to a lower portion of side wall 212 by a bolt B2. As illustrated in Figs. 4 and 5, the lower portion of side wall 212 is formed with a notch 212s to receive main body 310.

Adhesive member 320 adheres an end portion of main body 310 in the second direction to lower surface 114a of power storage cell 100.

As illustrated in Fig. 4, the pair of support members 300 adjacent to each other in the second direction are in contact with bottom wall 230 and lower surface 114a of an end portion of power storage cell 100 in the second direction. The pair of support members 300 define a space S below each power storage stack 11, 12, 13, 14 together with power storage cell 100 and bottom wall 230. In other words, in the present embodiment, four spaces S are formed in housing 200.

As illustrated in Fig. 3, each space S extends in the first direction. Each space S functions as a smoke discharge path (hereinafter, it is referred to as "smoke discharge path S"). Smoke discharge path S is configured to discharge gas released from safety valve SV of power storage cell 100 to the outside of housing 200. Each smoke discharge path S is connected to a common space inside housing 200 at an end portion of each smoke discharge path S in the first direction.

As illustrated in Fig. 3, an explosion-proof valve 290 is disposed at a portion of connection wall 216 facing smoke discharge path S in the first direction. Explosion-proof valve 290 is disposed in the common space inside housing 200. Explosion-proof valve 290 releases the pressure of housing 200. Explosion-proof valve 290 opens when the pressure of housing 200 becomes equal to or higher than a reference pressure. Explosion-proof valve 290 is a check valve. As illustrated in Fig. 3, when a gas is released from any of power storage cells 100, the gas flows through smoke discharge path S in the first direction and is discharged out of housing 200 through explosion-proof valve 290.

Cooler 500 cools at least one power storage cell 100. Cooler 500 circulates a cooling medium (water or the like). As illustrated in Figs. 2 to 4, cooler 500 is disposed on top wall 220. More specifically, cooler 500 is disposed in recess 224 of top wall 220.

Cooler 500 is in thermal contact with at least one power storage cell 100 via top wall 220. In the present embodiment, a thermally conductive adhesive material 910 (see Fig. 4) extending in the first direction is disposed between cooler 500 and recess 224. In other words, in the present embodiment, cooler 500 is in thermal contact with each power storage stack 11, 12, 13, 14 via top wall 220 and thermally conductive adhesive material 910. Note that the thermal contact includes a mode in which cooler 500 is in contact with power storage cell 100 via top wall 220 only, and a mode in which cooler 500 is in indirect contact with power storage cell 100 via a thermally conductive member (such as an adhesive agent, a fixing member, or the like).

Cooler 500 forms at least a part of a cabin floor 30 (see Fig. 3) of a vehicle cabin. In addition to cooler 500, cabin floor 30 may include a floor structural member (a covering member, a buffering member, a carpet, or the like) disposed on cooler 500. The floor structural member is not illustrated in Figs. 2 and 4.

Instrument unit 800 is disposed, for example, at an end portion in the first direction. In the present embodiment, instrument unit 800 is disposed at a rear portion of top wall 220 in the front-rear direction of vehicle 1. Instrument unit 800 includes a junction box 812, a power supply unit 814, an electronic control unit 816, a unit cooler 824, and an instrument cover 830.

Junction box 812 is disposed at a position above top wall 220. Junction box 812 houses relays, fuses, and the like.

As illustrated in Fig. 3, cooler 500 includes an interposition member 518 interposed between top wall 220 and junction box 812. Junction box 812 is cooled by interposition member 518.

Power supply unit 814 is disposed at a position above junction box 812. Power supply unit 814 is cooled by unit cooler 824 disposed on the top of power supply unit 814.

Electronic control unit 816 is disposed at a position above junction box 812.

Instrument cover 830 covers junction box 812, power supply unit 814, electronic control unit 816, and unit cooler 824.

In power storage device 10 described above, when a gas is released downward through safety valve SV due to a short circuit or the like in any of the power storage cells 100, the gas flows into smoke discharge path S. The gas flows through smoke discharge path S in the first direction and is discharged out of housing 200 through explosion-proof valve 290 as illustrated in Fig. 3. Thus, any substance (such as debris) contained in the gas released from power storage cell 100 is prevented from adhering to external terminal 120 or the like of power storage cell 100.

Further, in power storage device 10, since side wall 212 is provided with a recess 214, when an external force is applied to side wall 212 in the second direction, side wall 212 is prevented from interfering with external terminal 120, and thereby external terminal 120 is prevented from being damaged by the interference. More specifically, when an external force is applied to side wall 212 in the second direction, upper opposite portion 213a contacts upper restraint band 130a and lower opposite portion 213b contacts lower opposite portion 213b, which prevents recessed area 214c of recess 214 from contacting external terminal 120. As a result, external terminal 120 is prevented from being damaged.

Hereinafter, modifications of the above-described embodiment will be described.

### <First Modification>

As illustrated in Fig. 6, side wall 212 may be formed into a hollow wall. In this case, side wall 212 is formed by, for example, extrusion molding. The thickness of a horizontal portion 212h of side wall 212 is smaller than the thickness of a vertical portion 212v, and thereby side wall 212 functions as an energy absorber when an external force is applied to power storage device 10 in the second direction.

According to the first modification, side wall 212 can be formed in a relatively easy manner, and side wall 212 can be made lighter in weight.

### <Second Modification>

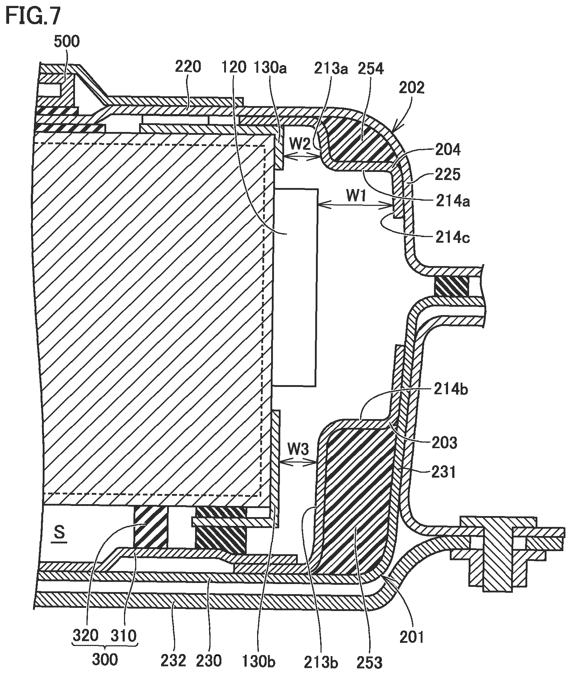

As illustrated in Fig. 7, power storage device 10 may include a lower case 201, an upper cover 202, a lower member 203, and an upper member 204.

Lower case 201 opens upward. Lower case 201 includes a bottom wall 230 and a lower peripheral wall 231 rising from the peripheral edge of bottom wall 230. Lower peripheral wall 231 surrounds a lower portion of the four power storage stacks 11, 12, 13 and 14. A panel member 232 may be provided at a position below lower case 201 to protect bottom wall 230.

Upper cover 202 covers the four power storage stacks 11, 12, 13 and 14 together with lower case 201. Upper cover 202 includes a top wall 220 and an upper peripheral wall 225 extending downward from the peripheral edge of top wall 220.

Lower member 203 is connected to an inner surface of lower case 201 by welding or the like. More specifically, lower member 203 is connected to an upper surface of bottom wall 230 and an inner surface of lower peripheral wall 231. Lower member 203 includes a lower opposite portion 213b and a lower surface 214b of recess 214. A space formed by lower member 203 and lower case 201 is filled with a lower filler 253 such as a foaming agent or the like.

Upper member 204 is connected to an inner surface of upper cover 202 by welding or the like. More specifically, upper member 204 is connected to a lower surface of top wall 220 and an inner surface of upper peripheral wall 225. Upper member 204 includes an upper opposite portion 213a and an upper surface 214a of recess 214. A space formed by upper member 204 and upper cover 202 is filled with an upper filler 254 such as a foaming agent or the like.

It will be appreciated by those skilled in the art that the exemplary embodiments described above are specific examples of the following aspects.

### [Aspect 1]

A power storage device comprising:
a power storage stack which includes a plurality of power storage cells arranged side by side in a first direction; and
a side wall disposed on a lateral side of the plurality of power storage cells in a second direction orthogonal to both the first direction and a vertical direction,
each of the plurality of power storage cells including:
   a cell case; and
   an external terminal protruding in the second direction from a side surface of the cell case in the second direction,
the side wall including:
   an opposite portion facing the side surface of the cell case in the second direction; and
   a recess formed at a position facing the external terminal in the second direction and recessed from the opposite portion in a direction away from the external terminal,
the length of the recess in the vertical direction is greater than the length of the external terminal in the vertical direction.

According to the power storage device, since the side wall includes a recess, when an external force is applied to the side wall in the second direction, the side wall is prevented from interfering with the external terminal and the external terminal is prevented from being damaged by the interference.

### [Aspect 2]

The power storage device according to aspect 1, wherein
the opposite portion includes:
an upper opposite portion facing an upper portion of the power storage stack, the upper portion being located above the external terminal; and
a lower opposite portion facing a lower portion of the power storage stack, the lower portion being located below the external terminal,
   the recess includes a recessed area facing the external terminal,
   a dimension between the external terminal and the recessed area in the second direction is larger than a dimension between the power storage stack and the upper opposite portion in the second direction, and is larger than a dimension between the power storage stack and the lower opposite portion in the second direction.

According to this aspect, when an external force is applied to the side wall in the second direction, the upper opposite portion and the lower opposite portion come into contact with a portion of the power storage stack other than the external terminal, which prevents the recessed area from coming into contact with the external terminal.

### [Aspect 3]

The power storage device according to aspect 2, wherein
the power storage stack includes:
an upper restraint band disposed at a position above the external terminal and configured to restrain the plurality of power storage cells from both sides in the first direction; and
a lower restraint band disposed at a position below the external terminal and configured to restrain the plurality of power storage cells from both sides in the first direction,
the dimension between the external terminal and the recessed area in the second direction is larger than the dimension between the upper restraint band and the upper opposite portion in the second direction, and is larger than the dimension between the lower restraint band and the lower opposite portion in the second direction.

According to this aspect, it is possible to restrain the plurality of power storage cells with the upper restraining band and the lower restraining band, and it is also possible to prevent the external terminal from being damaged when an external force is applied to the side wall in the second direction.

### [Aspect 4]

The power storage device according to aspect 3, further comprising:
a lower case which includes a bottom wall disposed at a position below the power storage stack;
an upper cover which covers the power storage stack together with the lower case;
a lower member provided on an inner surface of the lower case at a position facing the power storage stack in the second direction; and
an upper member provided on an inner surface of the upper cover at a position facing the power storage stack in the second direction,
wherein the recess is constituted by a part of the lower case, a part of the upper cover, a part of the lower member, and a part of the upper member,
the lower member includes the lower opposite portion, and
the upper member includes the upper opposite portion.

### [Aspect 5]

The power storage device according to aspect 4, further comprising:
a lower filler filled between the lower case and the lower member; and
an upper filler filled between the upper cover and the upper member.

According to this aspect, it is possible to prevent the cross section of the lower member and the upper member from collapsing when an external force is applied to the side wall in the second direction.

Although the embodiments of the present disclosure have been described, it should be understood that the embodiments disclosed herein are illustrative and non-restrictive in all respects. The scope of the present disclosure is defined by the scope of the claims and encompasses all modifications equivalent in meaning and scope to the claims.

## Claims

1. A power storage device (10) comprising:
a power storage stack (11, 12, 13, 14) which includes a plurality of power storage cells (100) arranged side by side in a first direction; and
a side wall (212) disposed on a lateral side of the plurality of power storage cells (100) in a second direction orthogonal to both the first direction and a vertical direction,
each of the plurality of power storage cells (100) including:
a cell case (114); and
an external terminal (120) protruding in the second direction from a side surface of the cell case (114) in the second direction,
the side wall (212) including:
an opposite portion (213) facing the side surface of the cell case (114) in the second direction; and
a recess (214) formed at a position facing the external terminal (120) in the second direction and recessed from the opposite portion (213) in a direction away from the external terminal (120),
a length of the recess (214) in the vertical direction being greater than a length of the external terminal (120) in the vertical direction.

2. The power storage device (10) according to claim 1, wherein
the opposite portion (213) includes:
an upper opposite portion (213a) facing an upper portion of the power storage stack (11, 12, 13, 14), the upper portion being located above the external terminal (120); and
a lower opposite portion (213b) facing a lower portion of the power storage stack (11, 12, 13, 14), the lower portion being located below the external terminal (120),
the recess (214) includes a recessed area (214c) facing the external terminal (120),
a dimension (W1) between the external terminal (120) and the recessed area (214c) in the second direction is larger than a dimension (W2) between the power storage stack (11, 12, 13, 14) and the upper opposite portion (213a) in the second direction, and is larger than a dimension (W3) between the power storage stack (11, 12, 13, 14) and the lower opposite portion (213b) in the second direction.

3. The power storage device (10) according to claim 2, wherein
the power storage stack (11, 12, 13, 14) includes:
an upper restraint band (130a) disposed at a position above the external terminal (120) and configured to restrain the plurality of power storage cells (100) from both sides in the first direction; and
a lower restraint band (130b) disposed at a position below the external terminal (120) and configured to restrain the plurality of power storage cells (100) from both sides in the first direction,
the dimension (W1) between the external terminal (120) and the recessed area (214c) in the second direction is larger than the dimension (W2) between the upper restraint band (130a) and the upper opposite portion (213a) in the second direction, and is larger than the dimension (W3) between the lower restraint band (130b) and the lower opposite portion (213b) in the second direction.

4. The power storage device (10) according to claim 3, further comprising:
a lower case (201) which includes a bottom wall (230) disposed at a position below the power storage stack (11, 12, 13, 14);
an upper cover (202) which covers the power storage stack (11, 12, 13, 14) together with the lower case (201);
a lower member (203) provided on an inner surface of the lower case (201) at a position facing the power storage stack (11, 12, 13, 14) in the second direction; and
an upper member (204) provided on an inner surface of the upper cover (202) at a position facing the power storage stack (11, 12, 13, 14) in the second direction,
wherein the recess (214) is constituted by a part of the lower case (201), a part of the upper cover (202), a part of the lower member (203), and a part of the upper member (204),
the lower member (203) includes the lower opposite portion (213b), and
the upper member (204) includes the upper opposite portion (213a).

5. The power storage device (10) according to claim 4, further comprising:
a lower filler (253) filled between the lower case (201) and the lower member (203); and
an upper filler (254) filled between the upper cover (202) and the upper member (204).
